Europäisches Patentamt

European Patent Office

Office européen des brevets

(19)

(11) Veröffentlichungsnummer : **0 027 477**
B2

(12) **NEUE EUROPÄISCHE PATENTSCHRIFT**

(45) Veröffentlichungstag der neuen Patentschrift :
17.05.89

(51) Int. Cl.⁴ : **B 28 B 11/00**, B 29 D 28/00

(21) Anmeldenummer : 79104091.8

(22) Anmeldetag : 22.10.79

(54) Verfahren und Anlage zum Herstellen von Hohlblocksteinen mit Kunststoff-Füllung.

(43) Veröffentlichungstag der Anmeldung :
29.04.81 Patentblatt 81/17

(45) Bekanntmachung des Hinweises auf die Patenterteilung : 07.12.83 Patentblatt 83/49

(45) Bekanntmachung des Hinweises auf die Entscheidung
über den Einspruch : 17.05.89 Patentblatt 89/20

(84) Benannte Vertragsstaaten :
AT BE CH DE FR GB NL

(56) Entgegenhaltungen :
AT-B- 266 409
DE-A- 1 918 816
DE-A- 2 518 383
DE-A- 2 707 627
DE-A- 2 825 508
DE-B- 1 771 853
FR-A- 2 181 619
FR-A- 2 311 148
"G+H ISOVER", Grünzweig + Hartmann und Glasfaser AG
"Technische Daten B 302", Grünzweig + Hartmann
und Glasfaser AG, 10.3.1977
Auszug aus Zeitschrift "wksb", H.4, 1977, pp. 10+11

(73) Patentinhaber : Veit Dennert KG Baustoffbetriebe

D-8602 Schlüsselfeld (DE)

(72) Erfinder : Dennert, Heinz
Trosdorfer Weg 6
D-8602 Bischberg (DE)
Erfinder : Dennert, Hans Veit
Mozartweg 1
D-8602 Schlüsselfeld (DE)

(74) Vertreter : Tergau, Enno et al
Hefnersplatz 3 Postfach 11 93 47
D-8500 Nürnberg 11 (DE)

EP 0 027 477 B2

**Beschreibung**

Die Erfindung betrifft ein Verfahren zum Herstellen von Hohlblocksteinen mit einem oder mehreren, den Stein durchsetzenden wenigstens einseitig offenen Hohlräumen, die ganz oder teilweise mit aufgeschäumten und in den Hohlraumwänden verankerten oberflächlich miteinander verbundenen Kunststoffpartikeln gefüllt sind, bei welchem Verfahren die auszufüllenden Hohlräume (3) mit einer lockeren Schüttung aus Partikeln (6) eines thermoplastischen Kunststoffes gefüllt, sodann wenigstens eine Injektionslanze (27) in die Schüttung eingeführt und durch diese ein Heißgas bis zum oberflächlichen Aneinandersintern der Partikel (6) eingeblasen wird.

Es ist bekannt, zur Errichtung von Mauerwerk, insbesondere von schall- und wärmeisolierenden Mauern, sogenannte Hohlblocksteine zu verwenden. Es handelt sich hierbei um Steine unterschiedlicher Größe und aus unterschiedlichem Material, in welche eine oder mehrere meist regelmäßig angeordnete Kammern oder Hohlräume eingearbeitet sind, deren Wände zu den Außenwänden des Steines parallel verlaufen und die den gesamten Stein durchsetzen, vorzugsweise von Lagerfläche zu Lagerfläche. Die Steine bestehen häufig aus Bimssteinkörnern, welche mittels Zement untereinander verbunden sind. Sie können aber auch aus Kalk-Sandstein oder anderen geeigneten Stoffen bestehen wie beispielsweise Ton oder tonhaltigen Massen, die nach Formung durch Wärmebehandlung erhärtet worden sind.

Die den Stein durchsetzenden Hohlräume führen in jedem Fall zu einer erheblichen Material- und Gewichtseinsparung, ohne daß die Festigkeit des Steines wesentlich herabgesetzt wird. Die Hohlräume bewirken außerden durch die eingeschlossenen Luftpolster, daß das Wärmeleitvermögen des Gesamtsteines vermindert und seine Isolierfähigkeit folglich erhöht ist.

Zur Verbesserung der Wärme- und insbesondere Schallisolierfähigkeit derartiger Steine ist es bekannt (DE-C-17 08 765), die Hohlräume mit wärme- und schalldämmendem Isolierstoff zu füllen, wobei als Isolierstoff beispielsweise ein kompakter Schaumstoff aus Kunstharz verwendet werden kann, der durch Einpressen vorgefertigter Schaumstoffteile oder Einschäumen genügend fest und ohne Bildung von Hohlräumen mit den Kammerwänden verbunden wird. Die Wirkung derartiger Isolierstoff-, insgesondere Schaumstoff-Füllungen hinsichtlich der Verbesserung des Wärme- und Schallisoliervermögens ist beachtlich. Die mit derart kompaktem Schaumstoff gefüllten Steine haben jedoch den Nachteil, daß ihre Gas- bzw. Dampfdurchlässigkeit gegenüber ungefüllten Hohlblocksteinen stark gemindert ist, so daß solche Steine insbesondere durch Feuchtigkeitsstau zur Kondensbildung im Mauerwerk führen. Vergleichsmessungen haben gezeigt, daß der Dampfdiffusionswiderstandsfaktor, der bei den bekannten handelsüblichen Hohlblocksteinen aus zementgebundenem Bimsstein zwischen fünf und zehn liegt, durch den Einbau kompakter Schaum-Polystyrolplatten auf 40 bis 140, im Mittel auf etwa 70 steigt. Es bedeutet dies, daß der Diffusionswiderstand um etwa den Faktor 10 verschlechtert ist.

Aus der DE-A-19 18 816 ist ein Hohlblockstein bekannt, dessen Hohlräume mit partikelförmigen Kunststoffen, die oberflächlich aneinandergesintert sind, gefüllt ist. Die beim Aneinandersintern zwischen den Partikeln entstehenden Hohlräume sind mit kleineren Partikeln ausgefüllt, so daß die Füllung insgesamt gesehen keine durchgehend gasdurchlässigen Kanäle aufweist.

Auch die AT-B 266 409 beschreibt ein Verfahren zur Herstellung eines isolierenden Bauelementes, welches mit Kunststoffpartikeln gefüllte Hohlräume aufweist. Auch diese Partikel sind oberflächlich aneinandergesintert, was beispielsweise durch Einblasen von Wasserdampf erfolgen kann. Die so entstehenden, mit Hohlräumen durchsetzten Kunststoff-Isolierkörper können aber auch durch einen Polyurethanschaum ersetzt sein, der durch Mischen der beiden chemischen Komponenten unmittelbar in den Hohlräumen des Steines entstanden ist. Dies zeigt, daß es auch beim Gegenstand der AT-B 266 409 auf die durchgehenden Gaskanäle nicht ankommt.

Aus der DE-B 1 771 853 ist ein Außenwandstein mit Wärmedämmung bekannt, in dessen Hohlräume partikelartige Wärmedämmittel in Haufwerkspackung eingefüllt sind. Die Wärmedämmittel können dabei als lose Schüttung vorhanden sein oder an den Berührungspunkten durch Klebemittel miteinander verklebt sein. Aus der Entgegenhaltung ist es auch bekannt, die Schüttung so aufzubauen, daß sie nicht als Dampfbremse wirkt.

Besonders vorteilhaft ist es, die Füllung aus an sich bekannten, vorgeschäumten Polystyrolperlen herzustellen, die aus treibmittelhaltigem Polystyrolgranulat durch Erwärmen entstehen. Das Erwärmen wird vorzugsweise durchgeführt, indem das Granulat in ein auf etwa 100 °C erhitztes Medium gegeben wird. In diesem Mediumbad erweicht das thermoplastische Polystyrol und wird dabei von dem gleichzeitig verdampfenden oder gasabgebenden Treibmittel aufgebläht. Nach dem Entfernen des so behandelten Polystyrols aus dem Bad behalten die aufgeblähten Perlen ihre Form und Struktur, so daß ein hochvolumiges spezifisch leichtes Produkt von gutem Wärmeisoliervermögen vorliegt.

Zur Herstellung gefüllter Hohlblocksteine wird in an sich bekannter Weise von Hohlblocksteinen oder Hohlblocksteinrohlingen ausgegangen, deren auszufüllende Hohlräume mit einer lockeren Schüttung aus Partikeln eines thermoplastischen Kunststoffes gefüllt werden. Sodann wird wenigstens eine Injektionslanze in die Schuttung eingeführt und durch diese ein Heißgas bis zum oberflächlichen Aneinandersintern der Partikel eingeblasen. Als Heißgas wird vorzugsweise Wasserdampf angewandt, der eine Temperatur von 100 bis 180 °C aufweist. Für die Herstellung der Füllung werden vorzugsweise die bereits erwähnten Perlen aus Polystyrol eingesetzt, die vorher außerhalb der Hohlräume bei etwa 100 °C vorgeschäumt worden sind. Versuche haben ergeben, daß unter Verwendung einer Füllung aus vorgeschäumten Polystyrolperlen die erforderliche Verfestigung der Schüttung in Abhängigkeit von der Dampftemperatur in etwa folgenden Zeiten erreicht werden kann :

| Dampftemperatur | Dampfdruck im Dampfbereiter | Zeit |
|---|---|---|
| 100°C | 2 bar | 100 Sek. |
| 143°C | 5 bar | 6 Sek. |
| 170°C | 9 bar | 3 Sek. |

Bei Ausführung des beschriebenen Verfahrens ergibt sich mitunter der Nachteil, daß sich die durch das eingeblasene Heißgas (Wasserdampf) erhitzten Polystyrolperlen an der Mantelfläche der Injektionslanze festsetzen. Außerdem ergibt sich der Nachteil, daß nach Beendigung der Heißgaszufuhr sich die Perlen noch weiter aufblähen, da in ihnen noch eine erhebliche Wärmemenge gespeichert ist. Zur Überwindung dieser Nachteile wird vorgeschlagen, daß nach Beendigung der Heißgaszufuhr zum Erzeugen unregelmäßiger netzartig durchgehender Kanäle, die die gesamte Füllung für Gas oder Wasserdampf durchlässig machen, durch die Injektionslanzen Kaltgas in die Füllung eingeleitet wird. Hierdurch wird die Füllung abgekühlt, d. h. also die überflüssige Wärmemenge abgeführt, wodurch die erwähnten Nachteile vermieden werden. Als Kaltgas kann Luft mit normaler Außentemperatur eingeblasen werden. Hierbei spielt es für die Durchführung des Verfahrens keine Rolle, ob die Temperatur dieser Luft 25 bis 30 °C (wie im Sommer) beträgt oder um 0 °C herum liegt oder noch niedriger ist. In jedem Fall tritt die gewünschte schnelle Abkühlung der Stein-Füllung ein, so daß das hinderliche Nachblähen ausbleibt und auch die etwa an der Mantelfläche der Injektionslanzen angesinterten Perlen wieder abgestoßen werden. Für die Dauer der Kaltgaszufuhr genügen kurze Zeiten von 2 bis 15 Sekunden.

Zur Ausführung des Verfahrens wird eine Anlage eingesetzt, die wenigstens eine Beförderungsvorrichtung für die zu behandelnden Steine, wenigstens eine Füllstation sowie wenigstens eine Sinterstation die wenigstens eine Gasverteilerkammer mit daran angeschlossener Heißgasleitung nebst Heißgasventilen aufweist, sowie wenigstens eine, vorzugsweise aber mehrere Injektionslanzen, deren Anordnung der Anordnung der zu füllenden Hohlräume entspricht, die dadurch gekennzeichnet ist, daß die Gasverteilerkammer noch einen weiteren Anschluß nebst Ventil für die Zufuhr von Kaltgas aufweist. Die Beförderungsvorrichtung sollte dabei vorzugsweise ein Transportband sein, welches in vorgegebenem Takt schrittweise bewegbar ist. Anstelle eines Transportbandes können jedoch auch Palettenwagen o. dgl. eingesetzt werden. Das Transportband wird durch eine geeignete an sich bekannte Vorrichtung mit Hohlblocksteinen oder deren Rohlingen beladen, wobei die zu füllenden Hohlräume senkrecht angeordnet werden. Als vorteilhaft hat es sich erwiesen, die Steine gruppenweise zu etwa 6 Stück zusammenzulassen, wobei je 3 Steine in zwei Reihen angeordnet werden. Nach der Beladung des Bandes etwa in dieser Weise (eine andere Anzahl und Anordnung ist jedoch möglich und richtet sich u. a. nach der Größe der Steine) wird die Transportvorrichtung um einen vorgegebenen Betrag vorwärtsbewegt, so daß die Steine in den Bereich der Füllstation kommen. Die Füllstation weist wenigstens einer Vorratsbehälter auf, an dessen Unterseite wenigstens ein, vorzugsweise aber mehrere Füllstutzen angeordnet sind, deren Anordnung der Anordnung der Anordnung der zu füllenden Hohlräume entspricht. Der Vorratsbehälter ist bei Betrieb mit Partikeln aus thermoplastischem Werkstoff, also beispielsweise Perlen aus vorgeschäumtem Polystyrol gefüllt. Es ist auch möglich, mehrere Vorratsbehälter mit jeweils nur einem Füllstutzen anzuordnen. Ein gemeinsamer Vorratsbehälter mit mehreren Füllstutzen hat sich jedoch besser bewährt.

Die Füllstutzen können vorzugsweise jeweils einen unteren und einen oberen Abschlußschieber aufweisen und so bemessen sein, daß das zwischen den Schiebern befindliche Volumen dem Volumen der in die Hohlräume jeweils einzufüllenden Kunststoffpartikelfüllung entspricht. Die Abschlußschieber können dabei elektromagnetisch bewegbare Blenden oder Platten sein. Des weiteren kann am Vorratsbehälter eine Rüttelvorrichtung angeordnet sein, welche sicherstellt, daß beim Öffnen der oberen Blenden die Thermoplastteilchen in optimaler Schüttung in das Innere des als Meßrohr dienenden Füllstutzens einlaufen. Die vorgeschlagene Anordnung macht es möglich, nach freiem Belieben alle Kammern des Hohlblocksteines zu füllen oder auch nur eine Kammer oder eine gewünschte Anzahl. Je nach der gewünschten Anzahl und Verteilung der zu füllenden Kammern werden die jeweils zutreffenden Füllstutzen bzw. deren Abschlußschieber betätigt und die restlichen Abschlußschieber bleiben außer Betrieb.

Die Sinterstation weist wenigstens eine Gasverteilerkammer mit daran angeschlossener Heißgaszuleitung nebst Heißgasventil auf sowie wenigstens eine vorzugsweise aber mehrere Injektionslanzen, deren Anordnung der Anordnung der zu füllenden Hohlräume entspricht. Auch bie der Sinterstation kann jede Injektionslanze mit einer eigenen Gaszuleitung versehen sein. Einfacher und deshalb vorteilhafter ist es jedoch, die Sinterstation so aufzubauen, wie zuvor beschrieben.

Die Injektionslanzen sind Rohre mit vorzugsweise zylindrischem oder sich konisch verjüngendem Mantel die vorzugsweise an ihrem von der Gasverteilerkammer abgewandten Ende verschlossen sind und deren Mantel über den Umfang und die Höhe verteilte Gasaustrittsöffnungen aufweist. Beim Absenken der Verteilerkammer nebst Injektionslanzen werden die letzteren in die mit Kunststoffpartikeln gefüllten Hohlräume eingesenkt. Danach wird das Heißgasventil geöffnet und es strömt Heißgas, vorzugsweise der erwähnte Wasserdampf, für eine vorbestimmte Zeit in die Schüttung ein. Das Heißgas heizt die Thermoplastpartikel vornehmlich oberflächlich auf und führt dazu, daß diese an der Oberfläche leicht, jedoch hinreichend zusammensintern.

Um die Bewegungen der einzelnen Anlagenteile aufeinander abzustimmen wird vorgeschlagen, daß die Beförderungsvorrichtung, die die Apparate der Füllstation sowie die Apparate der Sinterstation hinsichtlich ihrer Arbeitsbewegungen über Koppelglieder aufeinander abgestimmt sind. Die Koppelglieder werden vorteilhafterweise elektrisch bzw. elektronisch betrieben. Sie wirken über eine Zeitschaltvorrichtung jeweils auf die Antriebe der einzelnen Stationen ein und steuern gleichzeitig auch die in die Füllstutzen eingebauten Blenden, gegebenenfalls den an den Vorratsbehälter angeschlossenen Vibrator sowie schließlich auch das Heißgasventil sowie das Kaltgasventil der Sinterstation. Die Anordnung kann desweiteren Fotozellen oder Endschalter zur Überwachund der richtigen Steinanordnung enthalten und auf diese Weise sicherstellen, daß die Füllstation und/oder Sinterstation nicht abgesenkt wird, wenn infolge einer Störung die Steine nicht in der richtigen Anordnung auf die Beförderungsvorrichtung gestellt worden sind. Der Aufbau einer derartigen Koppelstation auf elektrischer bzw. elektronischer Basis ist dem einschlägigen Fachmann heute ohne weiteres möglich, so daß sich eine nähere Beschreibung der elektronischen Schaltung erübrigt. Einzelheiten über diese Schaltung gehören nicht zum Gegenstand der Erfindung.

Der Anmeldungsgegenstand wird im folgenden anhand der beigefügten Zeichnung näher erläutert. Es stellen dar :

Figur 1 eine perspektivische Ansicht, teilweise geschnitten, eines erfindungsgemäßen nach dem Verfahren hergestellen Hohlblocksteines ;

Figur 2 ein vergrößerter Ausschnitt aus der Schüttung gemäß Figur 1 ;

Figur 3 eine perspektivische, jedoch schematisch vereinfachte Ansicht einer Gesamtanlage zur Herstellung der gefüllten Hohlblocksteine ;

Figur 4 eine vergrößerte Darstellung eines Füllstutzens nebst oberer und unterer Blende ;

Figur 5 eine perspektivische Ansicht einer Injektionslanze von zylindrischer Form ;

Figur 6 eine perspektivische Ansicht einer Injektionslanze von konisch verjüngter Form.

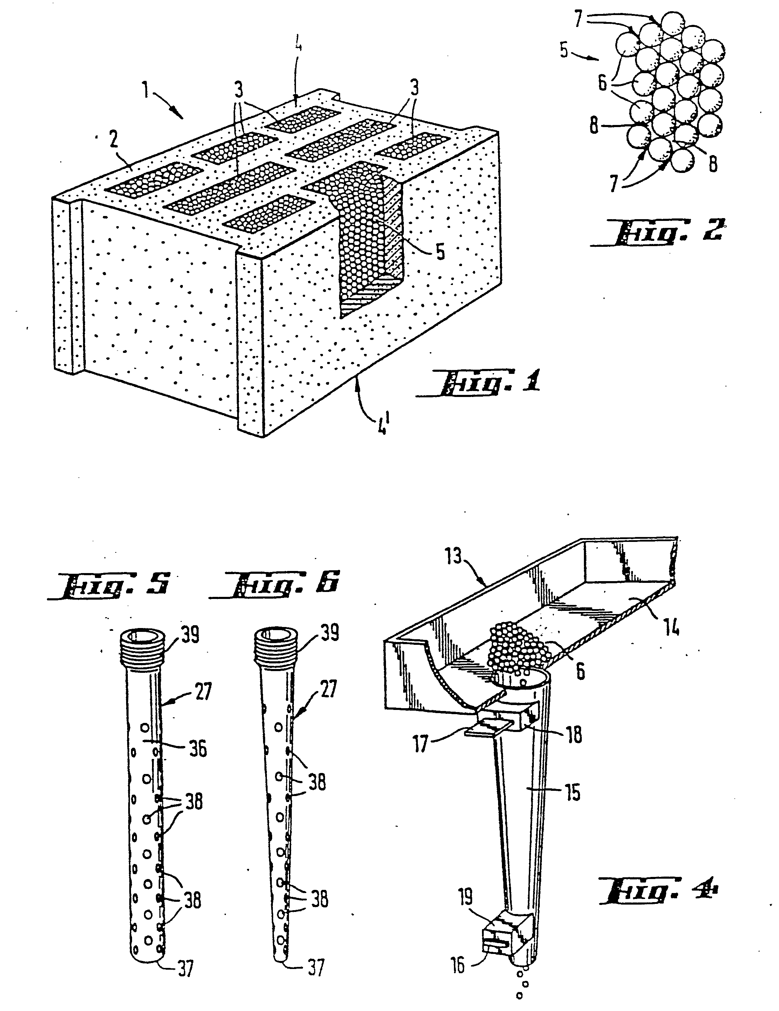

Der in Figur 1 dargestellte Hohlblockstein ist als Ganzes mit 1 bezeichnet, Er besteht aus dem Steinkörper 2, in den mehrere Hohlräume 3 eingearbeitet sind. Die Hohlräume 3 sind im dargestellten Ausführungsbeispiel in drei Reihen angeordnet und von unterschiedlicher Größe. Sie durchsetzen den Steinkörper 2 in seiner gesamten Länge und reichen von der Lagerfläche 4 bis zur Lagerlfäche 4' auf der entgegengesetzten Seite. Die Form und Anordnung der Hohlraüme 2 ist für die Erfindung nicht kritisch, ebensowenig der Werkstoff, aus dem die Hohlblocksteine gefertigt sind.

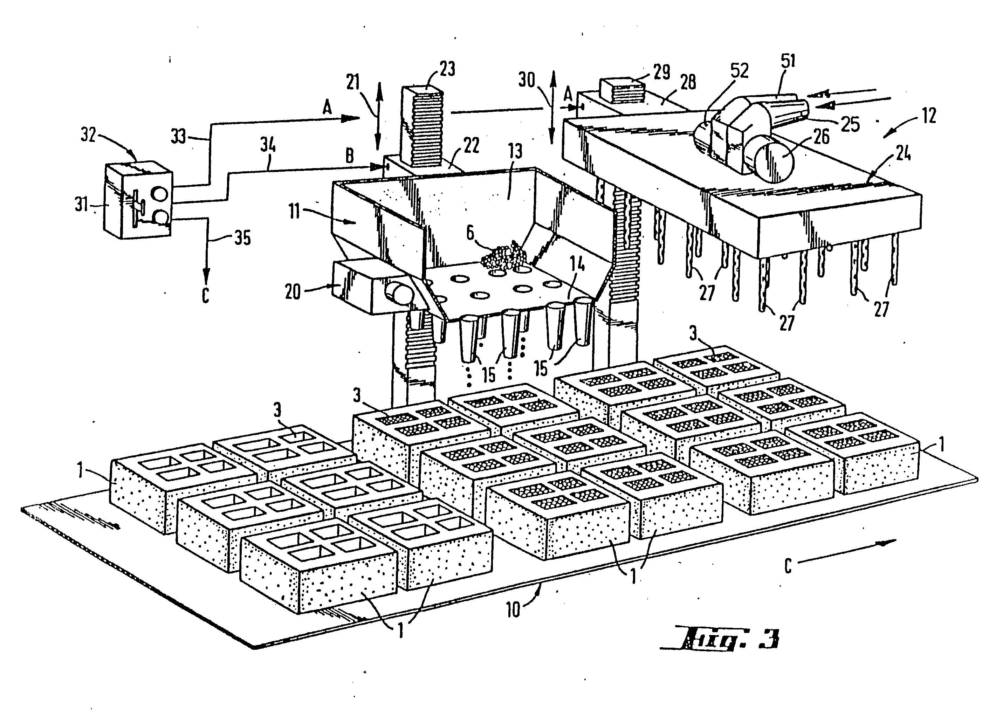

In Figur 4 ist einer der Hohlräume 3 teilweise aufgerissen gezeichnet, so daß die Füllung 5 sichtbar ist, die sich im Innern dieses Hohlraumes befindet. Auch die anderen Hohlräume sind in entsprechender Weise gefüllt, was jedoch nicht so deutlich zu erkennen sit, da hier die Füllungen nur von oben sichtbar sind.

In Figur 2 ist ein Ausschnitt der Füllung 5 dargestellt. Es ist erkennbar, daß die Füllung aus zahlreichen kugelförmigen Partikeln 6 besteht, die dicht aneinander gepackt sind. An den Berührungsstellen 7 sind die Partikel jeweils miteinander verbunden, vorzugsweise versintert (verschweißt). Sie bilden auf diese Weise ein fest zusammenhängendes Haufwerk, welches jedoch von einem Netz von gas- bzw. dampfdurchlässigen Kanälen 8 durchzogen ist. Diese Kanäle 8 bewirken, daß die Füllung und damit der gesamte Hohlblockstein trotz stark erhöhter Wärmedämmwirkung gut gas- bzw. dampfdurchlässig bleibt. Im einzelnen hat sich gezeigt, daß beispielsweise der Wärmedurchlaßwiderstand $\tau/\lambda$ (gemessen in $m^2 \times h \times °C \times Kcal$) bei einer Wanddicke von 30 cm, beidseitig verputzt, von ca. 1,07 beim ungefüllten Stein auf ca. 2,0 beim gefüllten Stein angestiegen ist und folglich um rund 100 % verbessert wurde, während der Diffusionswiderstandsfaktor den Wert von ca. 10 nicht überstiegen hat.

In Figur 3 ist eine bevorzugte Ausführungsform einer Anlage zur Herstellung der vorgeschlagenen Steine schematisch wiedergegeben. Die Anlage besteht grundsätzlich aus wenigstens einer Beförderungsvorrichtung 10 für die zu behandelnden Steine 1, wenigstens einer Füllstation 11 sowie wenigstens einer Sinterstation 12.

Die Beförderungsvorrichtung 10 ist im dargestellten Beispiel ein Förderband, von dem in Figur 3 allerdings nur ein Ausschnitt zu erkennen ist. Das rückführende Trum sowie die Umlenk- und Antriebsvorrichtung sind der Übersichtlichkeit halber fortgelassen. Anstelle des Transportbandes kann als Beförderungsvorrichtung auch ein Zug aus Palettenwagen oder eine ähnliche Anordnung eingesetzt werden. Wesentlich ist, daß die zu behandelnden Steine 1 in vorgegebener und stets gleichbleibender Anordnung auf der Beförderungsvorrichtung abgelegt werden, wobei die zu füllenden Hohlräume 3 stets in senkrechter Richtung stehen müssen. Die in Figur 3 wiedergegebene spezielle Anordnung von jeweils sechs Steinen in zwei Reihen zu je drei Steinen ist unwesentlich und kann durch eine andere Anordnung ersetzt sein.

Die Füllstation 11 besteht im dargestellten Beispiel aus einem Vorratsbehälter 13, an dessen Unterseite 14 mehrere Füllstutzen 15 angeordnet sind. Die Anordnung der Füllstutzen 15 entspricht der Anordnung der zu füllenden Hohlräume 3 und hängt folglich von der Anordnung der Steine 1 auf der transportvorrichtung 10 ab. Sie muß naturgemäß bei einer gegebenen Anordnung stets konstant gehalten werden.

4

Der Vorratsbehälter 13 ist mit Thermoplastpartikeln 6 gefüllt, die von diesem Teil der Vorrichtung in die Hohlräume 3 eingefüllt werden sollen. Um beim Betrieb der Anordnung eine stets gleichbleibende Füllung zu erreichen, kann das Innenvolumen der Füllstutzen 15 als Meßgefäß verwenden werden. Die Füllstutzen weisen hierzu jeweils einen unteren Abschlußschieber 16 und einen oberen Abschlußschieber 17 auf, wie dies in Figur 4 vergrößert dargestellt ist. Die Absschlußschieber 16 und 17 sind im dargestellten Ausführungsbeispiel Platten oder Bleche, welche von Elektromagneten 18 und 19 hin- und hergeschoben werden.

Um eine optimale Füllung der Stutzen 15 zu erreichen, weist der Vorratsbehälter 13 noch eine Rüttelvorrichtung 20 auf, wie dies an sich bei Fülltrichtern für Schüttgüter bekannt ist.

Figur 3 läßt desweiteren erkennen, daß der Vorratsbehälter 13 mit allen fest damit verbundenen Teilen in Richtung des Doppelpfeiles 21 heb- und senkbar ist. Es kann dies mit Hilfe eines Stellmotors 22 bewirkt werden, der die gesamte Fülleinheit anhand einer Säule 23 auf- und abbewegt.

Die Sinterstation 12 weist eine Gasverteilerkammer 24 mit daran angeschlossener Heißgaszuleitung 25 nebst Heißgasventil 26 auf. An die Gasverteiler 24 ist desweiteren eine Kaltgaszuleitung 51 nebst Kaltgasventil 52 angeschlossen. Anstelle von zwei getrennten Ventilen kann auch ein gemeinsames Heißgas-Kaltgas-Ventil treten, welches es gestattet, wechselweise das heiße und das kalte Gas einzublasen, sowie auch beide Gaseinlässe abzusperren.

An die Unterseite der Gasverteilerkammer 24 sind mehrere Injektionslanzen 27 angeschlossen, deren Anordnung der Anordnung der zu füllenden Hohlräume 3 entspricht. Auch die Gasverteilerkammer ist mit Holfe eines Stelfmotors 28, der an einer Säule 29 angreift, in Richtung des Doppelpfeiles 30 auf- und abbewegbar.

Die Injektionslanzen 27 können verschiedene Ausführungsformen aufweisen. In Figur 5 ist der Fall dargestellt, daß die Injektionslanzen 27 Rohre 36 mit zylindrischem Mantel sind, die an ihrem von der Gasverteilerkammer abgewandten Ende 37 verschlossen sind und deren Mantel zahlreiche über den Umfang und die Höhe verteilte Gasaustrittsöffnungen 38 aufweist. Auch der Innenmantel der in Figur 5 dargestellten Injektionslanze ist zylindrisch geformt, so daß sich das Gas gleichmäßig in der Lanze verteilt. Die Injektionslanzen können auch breit und schwertförmig geformt sein. Zum leichteren Auswechseln weisen die Lanzen an ihrem oberen Ende ein Gewinde 39 auf, mit dem sie in die Gasverteilerkammer 24 eingeschraubt werden können.

In Figur 6 ist der Fall dargestellt, daß die Injektionslanze 27 ein Rohr mit sich konisch verjüngendem Mantel ist. Auch dieses Rohr ist vorzugsweise am unteren Ende 37 verschlossen und der Mantel weist zahlreiche über den Umfang und die Höhe verteilte Gasaustrittsöffnungen 38 auf. Auch bei dieser Ausführungsform ist ein Gewinde 39 zum Einschrauben in die Gasverteilerkammer 24 vorgesehen. Über die dargestellten Ausführungsformen hinaus ist es möglich, nach unten geöffnete Lanzen zu verwenden, insbesondere wenn sich diese verjüngen.

Um sicherzustellen, daß die einzelnen Anlagengruppen taktmäßig zur Verrichtung ihrer jeweiligen Funktion zusammenarbeiten, weist die Anlage Koppelglieder 31 auf, welche die Bewegungsabläufe der einzelnen Teile steuert. Am vorteilhaftesten ist es, wenn die Koppelglieder elektrisch oder elektronisch gesteuerte Schaltungen sind. Dieser Fall ist in Figur 3 angenommen und symbolisch dargestellt. Die Schaltung befindet sich in dem Kasten 32 und sie ist über Leitungen 33, 34, 35 mit den Antriebsaggregaten sowohl der Beförderungsvorrichtung wie auch der Füllstation wie auch der Sinterstation verbunden. Um die Darstellung übersichtlich zu halten, sind die Leitungen wo erforderlich in Figur 3 unterbrochen und die Fortsätze sind mit den Buchstaben A, B und C gekennzeichnet.

Zusätzlich kann der Kasten 32 noch Überwachungseinrichtungen enthalten, die beispielsweise mit Hilfe von Fotozellen die richtige Anordnung der Teile überwachen und die Anlage bzw. Stationen davon abschalten, wenn Störungen eintreten. Andererseits ist es möglich, die erforderliche Kopplung auch auf mechanischem Wege zu erreichen. Die elektronische Kopplung ist jedoch vorzuziehen.

Die anlage arbeitet wie folgt :

Zunächst werden die zu füllenden Hohlblocksteine 1 in einer für jede Anlage festgelegten Anordnung auf der Beförderungsvorrichtung abgestellt. Während dies geschieht, werden in der Füllstation die oberen Schieber 16 geöffnet und die Rüttelvorrichtung 20 in Betrieb gesetzt. Dadurch werden die Füllstutzen 15 mit Kunststoffgranulat gefüllt. Sobald der Füllvorgang beendet ist, werden die Schieber 16 wieder geschlossen.

Nach beendetem Aufsetzen der frischen Steine 1 wird die Beförderungsvorrichtung 10 um einen Arbeitstakt vorbewegt. Die Steine werden dadurch passgenau in die Füllstutzen 15 gebracht. Ist dies geschehen, so wird der Vorratsbehälter 13 mit allen daran fest angeordneten Teilen nach unten abgesenkt, so daß die Füllstutzen dicht oberhalb der zu füllenden Hohlräume enden. Danach wird der untere Abschlußschieber 17 der Füllstutzen 15 geöffnet, so daß sich der Füllstutzeninhalt in die Holräume 3 ergießt. Der Füllvorgang ist damit abgeschlossen und die Vorrichtung 13 wird mit Hilfe des Stellmotors 22 wieder nach oben bewegt. Gleichzeitig während dieses Füllvorganges werden weitere Steine 1 auf der Transportvorrichtung abgestellt, welche die nächste Charge bilden.

Nach Abschluß dieser Vorgänge rückt die Transportvorrichtung wieder um einen Arbeitstakt weiter, so daß die bereits gefülltten Steine nun in den Bereich der Sinterstation 12 und die neu aufgelegten Steine in den Bereich der Füllstation gelangen. In der Füllstation hat sich inzwischen der bereits beschriebene Vorgang (Füllung der Füllstutzen) wiederholt.

Die Gasverteilerkammer 24 mitsamt den daran angeschlossenen Teilen wird nun mit Hilfe des Stellmotors 28 abgesenkt und zwar so weit, daß die Injektionslanzen 27 tief in die Hohlräume 3 der Steine und damit in die Füllungen eingreifen. Ist dieser Zustand erreicht, wird das Heißgasventil 26 geöffnet und dadurch Heißgas (Wasserdampf) in die Hohlräume und die Füllung geleitet.

Nach Ablauf einer vorbestimmten Zeit wird das Heißgasventil 26 geschlossen und das Kaltgasventil 52 geöffnet. Nun strömt Kaltgas durch die Injektionslanzen 27 in die Füllung ein und kühlt sowohl die Lanzen wie auch die Füllung selbst um einen hinreichenden Betrag ab. Dies bewirkt, daß etwa an den Lanzenaußenflächen angesinterte Kunstoffpartikel abplatzen und verhindert gleichzeitig, daß der Blähvorgang weiter fortschreitet als gewünscht. Dies ist wichtig um zu verhindern, daß die nun zusammengesinterten Teile durch weiteres Blähen anwachsen und schließlich über den Rand der Steine hinausreichen. Sind all diese Vorgänge abgeschlossen, so wird das Kaltgasventil 52 wieder geschlossen und die Gesamtvorrichtung mit Hilfe des Stellmotors 28 wieder nach oben bewegt. Der Sintervorgang ist damit abgeschlossen.

## Patentansprüche

1. Verfahren zum Herstellen von Hohlblocksteinen mit einem oder mehreren den Stein durchsetzenden, wenigstens einseitig offenen Hohlräumen, die ganz oder teilweise mit aufgeschäumten und in den Hohlraumwänden verankerten, oberflächlig miteinander verbundenen Kunststoffpartikeln gefüllt sind, bei welchem Verfahren die auszufüllenden Hohlraüme (3) mit einer lockeren Schüttung aus Partikeln (6) eines thermoplastischen Kunststoffes gefüllt, sodann wenigstens eine Injektionslanze (27) in die Schüttung eingeführt und durch diese ein Heißgas bis zum oberflächlichen Aneinandersintern der Partikel (6) eingeblasen wird, dadurch gekennzeichnet, daß nach Beendigung der Heißgaszufuhr zum Erzeugen unregelmäßiger netzartig durchgehender Kanäle (8), die die gesamte Füllung für Gas oder Wasserdampf durchlässig machen, durch die Injektionslanzen (27) Kaltgas in die Füllung eingeleitet wird.

2. Verfahren nach Anspruch 1, dadurch gekennzeichnet, daß als Kaltgas Luft von normaler Außentemperatur in die Füllung eingeleitet wird.

3. Verfahren nach Anspruch 1 oder 2, dadurch gekennzeichnet, daß die Kaltluftzufuhr über eine Zeit von vorzugsweise 2-15 Sekunden erfolgt.

4. Anlage zur Durchführung des Verfahrens nach Anspruch 1 mit wenigstens einer Beförderungsvorrichtung (10) für die zu behandelnden Steine (1), wenigstens einer Füllstation (1) sowie wenigstens einer Sinterstation (12), die wenigstens eine Gasverteilerkammer (24) mit daran angeschlossener Heißgasleitung (25) nebst Heißgasventil (26) aufweist, sowie wenigstens eine, vorzugsweise aber mehrere Injektionslanzen (27), deren Anordnung der Anordnung der zu füllenden Hohlräume (3) entspricht, dadurch gekennzeichnet, daß die Gasverteilerkammer (24) noch einen weiteren Anschluß (51) nebst Ventil (52) für die Zufuhr von Kaltgas aufweist.

## Claims

1. Process for the production of hollow building blocks with one or more cavities which extend through the block, are open on at least one side, and are filled, completely or partially, with foamed plastic particles which, bonded together at their surfaces, are anchored in the walls of the cavities, in which process the cavities (3) to be filled are filled with a loose charge of particles (6) of a thermoplastic material, at least one injection lance (27) is then inserted into the charge of particles and a hot gas is blown in, through this lance, until the particles (6) sinter together at their surfaces, characterized in that, after terminating the supply of hot gas, to produce irregular, network-like passages (8), which are continuous and render the entire filling pervious to gas or water vapour, cold gas is passed into the filling through the injection lances (27).

2. Process according to Claim 1, characterized in that air, at a normal outside temperature, is passed into the filling, as cold gas.

3. Process according to Claim 1 or 2, characterized in that the supply of cold air is maintained for a period of, preferably, 2 to 15 seconds.

4. Installation for carrying out the process according to Claim 1, with at least one conveying appliance (10) for the blocks (1) which are to be treated, at least one filling station (11), and at least one sintering station (12), which possesses at least one gas-distribution chamber (24) with a hot gas line (25) connected thereto and, in addition, a hot gas valve (26), as well as at least one, but preferably several, injection lances (27), the arrangement of which corresponds to the arrangement of the cavities (3) which are to be filled, characterized in that the gas-distribution chamber (24) possesses yet a further connection (51) and, in addition, a valve (52), for the supply of cold gas.

## Revendications

1. Procédé pour fabriquer des briques ou blocs perforés, présentant une ou plusieurs perforations traversant le bloc, ouvertes d'un côté ou moins et qui sont entièrement ou partiellement remplies de particules de matière plastique mousse, particules qui sont ancrées dans les parois des perforations et

# EP 0 027 477 B2

sont superficiellement reliées entre elles, selon lequel on remplit les perforations à remplir (3) avec une charge non tassée de particules (6) déversées en vrac d'une matière thermoplastique, on introduit ensuite au moins une lance d'injection (27) dans la large et on insuffle à travers celle-ci un gaz chaud jusqu'à ce que les particules (6) soient superficiellement frittées les unes aux autres, caractérisé en ce que, après la fin de l'amenée de gaz chaud, on introduit dans le remplissage, à travers les lances d'injection (27), du gaz froid pour la création de canaux (8) traversants irréguliers, formant un réseau et rendant tout le remplissage perméable au gaz ou à la vapeur d'eau.

2. Procédé selon la revendication 1, caractérisé en ce que l'on introduit de l'air ayant la température extérieure normale en tant que gaz froid dans le remplissage.

3. Procédé selon la revendication 1 ou 2, caractérisé en ce que l'on introduit de l'air froid pendant une durée qui est de préférence comprise entre 2 et 15 secondes.

4. Installation pour la mise en œuvre du procédé selon la revendication 1, comprenant au moins un dispositif de transport (10) pour les blocs (1) à traiter, au moins un poste de remplissage (11) ainsi qu'au moins un poste de frittage (12), au moins une chambre de distribution de gaz (24) sur laquelle est branchée une canalisation de gaz chaud (25) et qui est équipée d'une soupape à gaz chaud (26), ainsi qu'au moins une mais de préférence plusieurs lances d'injection (27) dont la disposition correspond à la disposition des perforations (3) à remplir, caractérisée en ce que la chambre de distribution de gaz (24) présente un dispositif de raccordement supplémentaire (51) avec une soupape (52) pour l'amenée de gaz froid.

7

_Fig. 1_

_Fig. 2_

_Fig. 5_

_Fig. 6_

_Fig. 4_

Fig. 3